(19) Europäisches Patentamt / European Patent Office / Office européen des brevets

(11) **EP 1 673 980 B2**

(12) **NEW EUROPEAN PATENT SPECIFICATION**
After opposition procedure

(45) Date of publication and mention
of the opposition decision:
**04.09.2013 Bulletin 2013/36**

(45) Mention of the grant of the patent:
**01.09.2010 Bulletin 2010/35**

(51) Int Cl.:
***A23G 9/00*** *(2006.01)*

(21) Application number: **05257399.5**

(22) Date of filing: **01.12.2005**

(54) **Frozen confection and process for manufacture of frozen confection**

Eiskonfekt und Verfahren zur Herstellung von Eiskonfekt

Dessert glacé et procédé de préparation du dessert glacé

(84) Designated Contracting States:
**AT BE BG CH CY CZ DE DK EE ES FI FR GB GR HU IE IS IT LI LT LU LV MC NL PL PT RO SE SI SK TR**

(30) Priority: **23.12.2004 EP 04258086**

(43) Date of publication of application:
**28.06.2006 Bulletin 2006/26**

(73) Proprietors:
• **Unilever PLC**
**London**
**EC4Y 0DY (GB)**
Designated Contracting States:
**CY GB IE**
• **Unilever N.V.**
**3013 AL Rotterdam (NL)**
Designated Contracting States:
**AT BE BG CH CZ DE DK EE ES FI FR GR HU IS IT LI LT LU LV MC NL PL PT RO SE SI SK TR**

(72) Inventors:
• **Fleming, Caroline Marie c/o Unilever R&D Bedford, MK44 1LQ (GB)**
• **Heritage, Anita Frances c/o Unilever R&D Bedford, MK44 1LQ (GB)**
• **Underdown, Jeffrey c/o Unilever R&D Bedford, MK44 1LQ (GB)**
• **Wix, Loyd c/o Unilever R&D Bedford, MK44 1LQ (GB)**

(74) Representative: **Warner, Guy Jonathan et al**
**Unilver PLC**
**Unilever Patent Group**
**Colworth House**
**Sharnbrook**
**Bedford, Bedfordshire MK44 1LQ (GB)**

(56) References cited:
EP-A- 1 396 193     NL-A- 8 702 797
US-A- 4 376 791     US-A- 4 400 405
US-A- 4 631 196     US-A1- 2003 147 995
US-B1- 6 558 729

• **Maltodextrins Analytical Characteristics (Roquette)**
• **HONER, CLEM: 'Justifying HFCS in ice cream mix', September 1981, DAILY RECORD pages 93 - 97**
• **R. T. MARSHALL, W.S. ARBUCKLE: 'Ice cream', vol. 4, 31 December 1986, AVI PUBLISHING COMPANY, INC., WESTPORT, CONNECTICUT, ISBN 0-87055-479-4 pages 1, 50, 77 - 98**
• **InterSpec product specification for Lemon-Lime preparation (manufacturer Grunewald Fruchtsaft GmbH)**
• **InterSpec product specification for Whey concentrate (manufacturer Glanbia FoodsSociety Ltd.)**
• **Specification sheet re. 90% high fructose corn syrup**
• **N.S. SCRIMSHAW ET AL.: 'The acceptability of milk and milk products in populations with a high prevalence of lactose intolerance' THE AMERICAN JOURNAL OF CLINICAL NUTRITION vol. 48, no. 4, 01 October 1988, pages 1083-1159 - 1101-1102**
• **R.T. MARSHALL, H.D. GOFF, R.W. HARTEL: 'Ice Cream', vol. 6, 31 December 2003, KLUWER ACADEMIC/PLENUM, NEW YORK, BOSTON, DORDRECHT, LONDON, MOSCOW, ISBN 0-306-47700-9 pages 56 - 57**

EP 1 673 980 B2

## Description

Technical Field of the Invention

The present invention relates to frozen confections such as ice creams and sorbets. More particularly the present invention relates to low-calorie frozen confections.

Background to the Invention

The incidence of obesity and the number of people considered overweight in countries where a so-called Western diet is adopted has drastically increased over the last decade. Since obesity and being overweight are generally known to be associated with a variety of diseases such as heart disease, type 2 diabetes, hypertension and arthereosclerosis, this increase is a major health concern for the medical world and for individuals alike. Furthermore, being overweight is considered by the majority of the Western population as unattractive.

This has led to an increasing interest by consumers in their health and has created a demand for products that help to reduce or control daily caloric intake and/or control body weight.

Frozen confections such as ice creams, sorbets and water ices are popular and convenient foods and there have been many previous attempts to formulate frozen confections having a reduced calorie content whilst retaining their palatability and convenience. For example, US 4,400,405 discloses dietetic frozen food dessert foods which are fat-free and have a low level of calories. Typical of previous attempts to formulate low-calorie frozen confections, the confections disclosed in US 4,400,405 contain large amounts of non-saccharide sweetener (e.g. sorbitol) and/or high levels of sugars.

Also US 4631196 discloses a dietetic frozen confection.

The importance of limiting the content of sugars in a healthy diet has recently been highlighted by a Joint WHO/FOA Expert Committee (see "Diet, nutrition and the prevention of chronic diseases" - Report of a Joint WHO/FAO Expert Consultation, WHO Technical Report Series 916, WHO, Geneva, 2003). Unfortunately, however, replacement of the sugars in frozen confections with non-saccharide sweeteners results in products with an artificial or even unpleasant taste and/or aftertaste. Furthermore, certain non-saccharide sweeteners such as sugar alcohols can cause digestive discomfort in some individuals.

Thus, we have recognised that there is a need for a low-calorie frozen confection which contains a more natural and healthy sweetener system.

We have found that such a goal can be achieved by providing a frozen confection having a specific saccharide distribution.

Tests and Definitions

**Frozen confection**

As used herein, the term "frozen confection" refers to a sweet-tasting fabricated foodstuff intended for consumption in the frozen state (i.e. under conditions wherein the temperature of the foodstuff is less than 0°C, and preferably under conditions wherein the foodstuff comprises significant amounts of ice). Typical examples of frozen confections include ice creams, water ices and sorbets.

**Sugars**

As used herein the term "sugars" refers exclusively to digestible mono- and di-saccharides. The total sugar content of a frozen confection is thus the sum of all of the digestible mono- and di-saccharides present within the frozen confection, including any lactose from milk solids and any sugars from fruits.

**Complex saccharides**

As used herein, the term "complex saccharide" refers to oligosaccharides and polysaccharides with a degree of polymerisation (DP) of at least three.

**Digestible and non-digestible saccharides**

Digestible saccharides are defined as those saccharides with a metabolisable energy content of at least 3 kcal (12.6 kJ) per g of saccharide. Digestible complex saccharides are usually derived from starch and/or comprise alpha glycosidic linkages.

Non-digestible saccharides are defined as those saccharides with a metabolisable energy content of less than 3 kcal (12.6 kJ) per g of saccharide. Common non-digestible saccharides are non-starch complex saccharides but others include resistant starches and non-digestible di-saccharides.

**Non-saccharide sweetener**

Non-saccharide sweeteners as defined herein consist of:

- The intense sweeteners aspartame, saccharin, acesulfame K, alitame, thaumatin, cyclamate, glycyrrhizin, stevioside, neohesperidine, sucralose, monellin and neotame; and
- The sugar alcohols HSH (hydrogenated starch hydrosylate - also known as polyglycitol), erythritol, arabitol, glycerol, xylitol, sorbitol, mannitol, lactitol, maltitol, isomalt, and palatinit.

**Relative sweetness**

As defined herein, relative sweetness, R, refers to the sweetness of a substance relative to the sweetness of an equivalent weight of sucrose (i.e. sucrose has a relative sweetness of 1). The relative sweetness of the non-saccharide sweeteners is given in Table 1.

TABLE 1

| Non-Saccharide Sweetener (i) | Relative sweetness ($R_i$) |
|---|---|
| Aspartame | 200 |
| Saccharin | 400 |
| Acesulfame K | 200 |
| Alitame | 2,000 |
| Thaumatin | 2,000 |
| Cyclamate | 35 |
| Glycyrrhizin | 50 |
| Stevioside | 100 |
| Neohesperidine | 1,500 |
| Sucralose | 500 |
| Monellin | 2,000 |
| Neotame | 10,000 |
| HSH | 0.7 |
| Erythritol | 0.7 |
| Arabitol | 0.5 |
| Glycerol | 0.8 |
| Xylitol | 1.0 |
| Sorbitol | 0.6 |
| Mannitol | 0.6 |
| Lactitol | 0.4 |
| Maltitol | 0.8 |
| Isomalt | 0.6 |
| Palatinit | 0.5 |

For a mixture of non-saccharide sweeteners, the relative sweetness, R, is defined by Equation 1:

$$R = \frac{\sum_i R_i m_i}{\sum_i m_i} \qquad , \qquad (1)$$

wherein $m_i$ is the mass of non-saccharide sweetener i.

**Total energy content**

The total energy content (E) of a frozen confection is defined as the sum of the metabolizable energy of the ingredients present within 100 g of the frozen confection. It is calculated using Equation 2:

$$E = \sum_j f_j c_j \qquad , \qquad (2)$$

wherein $c_j$ is the mass of ingredient j in 100 g of the confection and $f_j$ is the calorie conversion factor for the ingredient j.
For digestible saccharides and proteins, $f_j$ is typically 4.0 kcal (16.7 kJ) per g. For fats, $f_j$ is 9.0 kcal (37.7 kJ) per g.
Calorie conversion factors are readily available from ingredient manufacturers. Alternatively, the factors may be determined from analysis and comparison of the composition and heats of combustion of dietary material with those of excreted material (see D.A.T. Southgate and J.V.G.A. Durnin, "Calorie conversion factors. An experimental reassessment of the factors used in the calculation of the energy value of human diets.", British Journal of Nutrition, 1970, 24, pp. 517-535).

**Overrun**

Overrun is defined by Equation 3:

$$\text{Overrun} = \frac{\text{volume of frozen aerated product} - \text{volume of premix at ambient temp}}{\text{volume of premix at ambient temp}} \times 100 \qquad . \qquad (3)$$

It is measured at atmospheric pressure.

Brief Description of the Invention

We have found that low-calorie frozen confections with low levels of sugars but with excellent palatability can be formulated even without the use of non-saccharide sweeteners by employing a sweetener system comprising at least 4% fructose and digestible complex saccharides in specific amounts.
Thus, in a first aspect, the present invention provides a frozen confection having a total energy content in the range 377 to 607 kJ (90 to 145 kcal) per 100 g of frozen confection and being substantially free from non-saccharide sweeteners. The frozen confection comprises:

• total sugar in an amount of less than 12% by weight of the frozen confection, the total sugar comprising at least 4% fructose by weight of the frozen confection, and
• digestible complex saccharides in an amount of from 10 to 30% by weight of the frozen confection.

By "substantially free from non-saccharide sweeteners" is meant that the frozen confection contains less non-saccharide sweetener than would be required to give a sweetness equivalent to 0.5% (w/w) sucrose, i.e., the frozen confection comprises non-saccharide sweeteners in a total amount $C_T$ given by the following condition:

$$C_T < X / R \qquad ,$$

wherein X is 0.5% (w/w) and R is the relative sweetness of the non-saccharide sweeteners. Preferably, X is 0.1% (w/w), more preferably 0.01% (w/w).

Fructose has a high relative sweetness and it has been found that at levels of at least 4% (w/w), preferably at least 4.5%, more preferably at least 4.75%, that the fructose (in combination with other saccharides) provides sufficient sweetness to negate the need for non-saccharide sweeteners.

Recent research has highlighted potential adverse effects of a high fructose intake on cardiovascular risk factors owing to the way in which fructose is metabolised. Therefore it is preferred that there is less than 9% fructose by weight of the frozen confection, more preferably less than 8%, even more preferably less than 7.5%.

The total sugars are present in an amount of less than 12%. A certain level of total sugars is desirable, however, in order to provide freezing point depression and contribute to the sweetness of the confection. Thus it is preferred that the frozen confection comprises at least 7% total sugars, more preferably at least 8% and most preferably at least 9% by weight of the frozen confection.

As well as fructose, the total sugar may comprise one or more monosaccharides such as glucose (dextrose) or galactose, and/or one or more disaccharides such as lactose, maltose or sucrose. It is particularly preferred that the total sugar comprises lactose because lactose provides excellent freezing point depression without unduly contributing to sweetness. Thus it is preferred that the total sugar comprises at least 0.5% lactose by weight of the frozen confection, preferably at least 2% and more preferably at least 3%. Too much lactose should be avoided however owing to its propensity to crystallise from solution at high concentration. Thus it is preferred that the lactose content is limited to less than 8% by weight of the frozen confection, more preferably less than 7% and most preferably less than 6.5%.

In order to compensate for the relatively low levels of sugars employed, it is necessary that the frozen confection comprises digestible complex saccharides in an amount of at least 10%. To avoid the confection becoming overly hard, however, it is necessary that the digestible complex saccharide is used in an amount of less than 30% by weight of the frozen confection, preferably less than 25% and most preferably less than 20%.

The complex saccharide can cause the ice cream to become hard and unpalatable owing to its relatively high molecular weight. Thus, although the digestible complex saccharide may be sourced from any suitable material, such as maltodextrin, starch or glucose syrup (also known as "corn syrup"), it is preferred that the digestible complex saccharide is substantially sourced from a glucose syrup having a DE greater than 20. Particularly preferred are glucose syrups having a DE in the range 22 to 45 DE as they contain complex saccharides of not too high a molecular weight whilst not contributing large amounts of sugars. Most preferred are glucose syrups having a DE in the range 22 to 34. Most convenient are glucose syrups comprising sugars in an amount of from 8 to 35% by dry weight of the glucose syrup, preferably from 10 to 25%.

It is preferable that the frozen confection contains fat in order to provide a carrier for fat-soluble flavours and to enhance the stability and processability of the confection. Thus it is preferable that the confection comprises at least 0.5% fat, more preferably at least 1% and most preferably at least 1.5%. The fat content should not be too high, however, otherwise the nutritional balance of the confection becomes unhealthy. Thus it is preferred that the confection comprises less than 7% fat by weight of the frozen confection, more preferably less than 6% and most preferably less than 5%.

As used herein, the term "fat" refers to both saturated and unsaturated fatty acids. The fatty acids are usually present in the form of esters (e.g. mono- / di- / tri-glycerides). In order for the fat to contribute optimally to the stability and processability of the confection, it is preferred that the confection contains some saturated fat. In particular it is preferred that the fat comprises at least 10% saturated fatty acids by weight of the fat, more preferably at least 20%. The saturated fat content may also be limited in order to increase the nutritional value of the confection. Thus in a preferred embodiment, the fat comprises less than 55% saturated fatty acids by weight of the fat, more preferably less than 50%, and most preferably less than 40%.

Suitable fats for use in the present invention include animal fats (such as butterfat) and vegetable oils (such as coconut oil, palm oil, sunflower oil, safflower oil, rapeseed oil, and soya oil) and mixtures thereof.

The frozen confection may also contain protein. Suitable proteins for use in the present invention include animal proteins such as milk proteins, egg proteins and gelatin as well as vegetable proteins such as soya proteins. Particularly preferred are milk proteins owing to their superior flavour, heat stability and surface activity. Suitable sources of milk protein include milk, concentrated milk, milk powders, whey, whey powders and whey protein concentrates/isolates. In order to aid in emulsification and/or aeration during manufacture of the frozen confection it is preferable that the protein content is greater than 1% by weight of the frozen confection, more preferably greater than 2%. In order to allow for destabilisation of the fat during freezing of the frozen confection and/or to prevent the texture of the confection from becoming chalky, it is also preferable that the protein content is less than 8%, more preferably less than 6% by weight of the frozen confection.

In a particularly preferred embodiment of the invention, the frozen confection further comprises non-digestible saccharides, as such materials can contribute to the freezing point depression and/or body of the confection without increasing the energy content of the confection or contributing to sweetness. Preferably the non-digestible saccharide is employed in an amount of at least 4% by weight of the frozen confection, preferably at least 5% and most preferably at least 7.5%. In order to avoid undue freezing point depression and/or undue hardness it is preferred that the non-digestible saccharide is present in an amount of less than 15% by weight of the frozen confection, preferably less than 10% and most preferably less than 9.0%.

Suitable non-digestible saccharides include oligofructose, inulin, polydextrose, resistant starch and mixtures thereof.

Polydextrose is a randomly bonded condensation polymer of D-glucose with some bound sorbitol and citric acid. The 1,6-glycosidic linkage predominates in the polymer. Polydextrose is resistant to digestion in the human small intestinal tract and has a metabolisable energy content (calorie conversion factor) of 1.0 kcal (4.2 kJ) g$^{-1}$. It is available from the Danisco company under the trade name Litesse™. Polydextrose has a relatively high molecular weight of around 2500.

Resistant starches are food starches or starch derivatives which are not digestible by the human body. There are four main groups of resistant starches: RS1, RS2, RS3 and RS4. RS1 is physically inaccessible starch, e.g. trapped in seeds. RS2 starch is granular starch. Examples include banana, high amylose starches. RS3 starch is a highly retrograded starch, e.g. extruded cereals. RS4 is chemically modified starch. Resistant starches have a metabolisable energy content (calorie conversion factor) of around 1.6 kcal (6.7 kJ) g$^{-1}$. Resistant starches are available commercially from National Starch under the trade names Novelose™ and Hi-maize™.

Oligofructose and inulin are both available from the ORAFTI company under the trade names Raftilose™ and Raftiline™, respectively. Inulin and oligofructose are composed of linear chains of fructose units linked by ß(2-1) bonds and often terminated by a glucose unit. Inulin contains chains with up to 60 fructose units. Oligofructose has between 2 and 7 fructose units. Oligofructose is obtained from inulin by partial enzymatic hydrolysis. Inulin has a metabolisable energy content (calorie conversion factor) of 1.2 kcal (5.0 kJ) g$^{-1}$, whilst oligfructose has a metabolisable energy content (calorie conversion factor) of 2 kcal (8.4 kJ) g$^{-1}$. Despite its higher energy content, oligofructose is the preferred source of non-digestible saccharide for use in the present invention owing to its low molecular weight and therefore high freezing point depression power.

Frozen confections according to the present invention preferably contain ice. Thus it is preferred that the frozen confections contain at least 50% water by weight of the frozen confection, more preferably at least 61% and most preferably at least 65%.

According to a preferred embodiment of the invention, the frozen confection is aerated. The overrun may range from 50 to 150%, preferably 70 to 130%.

The frozen confections may also comprise a stabiliser. Suitable stabilisers include one or more of tara gum, guar gum, locust been gum, carrageenan, gelatin, alginate, carboxymethyl cellulose, xanthan and pectin.

The frozen confections provided by the present invention afford consumers the everyday enjoyment of a popular food without delivering too high an energy content. The total energy content of the confection is in the range 377 to 607 kJ (90 to 145 kcal) per 100 g of frozen confection.

The frozen confections of this invention may also suitably provide a low calorie base for delivering nutritional actives. Thus in a preferred embodiment the frozen confection is fortified with one or more nutritional actives. The nutritional actives may be a mineral, a vitamin, a pro-biotic, a pre-biotic, an antioxidant, an essential oil, a plant sterol, an appetite suppressant, or a bioactive peptide.

The frozen confections of the present invention are particularly suitable for storage and consumption from the domestic deep freeze. Thus it is preferred that the temperature of the frozen confection is below -12°C, more preferably below -14°C and most preferably in the range -25 to -16°C.

The frozen confections may be manufactured by any suitable process. However, in a further aspect of the invention there is provided a process for manufacturing the frozen confection, the process comprising the steps of:

(a) preparing a premix of ingredients; then
(b) pasteurising and homogenising the premix; then
(c) freezing and optionally aerating the premix to form a soft ice; and then
(d) hardening the soft ice to produce the frozen confection.

Typically the extrusion temperature in step (c) will be in the range -3°C to -10°C, preferably in the range -5°C to -9°C.

"Hardening" as used herein means cooling the soft ice until it is stiff enough to hold its own shape. It is a well-known term in the art and typical processes for hardening are described in "Ice Cream", 4th Edn, (W.S. Arbuckle, 1986, van Nostrand Renhold Co Inc, NY) at page 262. Typically the soft ice will be hardened at a temperature in the range -20 to -40°C, preferably -25 to -35°C.

Detailed Description of the Invention

The invention will now be further described by reference to the following non-limiting examples.

**Example 1 (outside scope of claim 1)**

This example demonstrates two frozen confections and a process according to the invention.

*Materials*

The frozen confections were formulated using the following materials:

- Skimmed milk powder (SMP) was supplied by Meadow Foods (York, UK) and contained 50% (w/w) lactose, 35% (w/w) protein and 1% (w/w) milk fat with the remainder being ash and moisture.
- Whey powder was "Avonol 600" supplied by Glanbia (Harefield, UK) and contained 50% (w/w) lactose, 35% (w/w) protein and 3% milk fat with the remainder being ash and moisture.
- Fructose was pure and crystalline and supplied by Tate and Lyle (London, UK).
- Guar gum was supplied by Willy Benecke (Hamburg, Germany) and had a moisture content of 14%.
- Carrageenan was Genulacta™ L100 supplied by CP Kelco (Lille Svensved, Denmark) and had a moisture content of 11%.
- Emulsifier was Grinsted™ Mono-Di HP 60 supplied by Danisco (Babard, Denmark) and contained 98%(w/w) saturated fatty acids.
- Locust Bean Gum (LBG) was Viscogum FA supplied by Degussa Texturant Systems (France) and had a moisture content of less than 10%.
- Palm oil was supplied by Cargill Brocklebank (Merseyside, UK) and had a saturated fatty acid content of 51%.
- Glucose syrup was C*Pur™ 01934, supplied by Cerestar (France) and had a DE of 38 and a moisture content of 3% (w/w). On a dry basis the glucose syrup solids consisted of 34% (w/w) sugars (consisting of 1% dextrose and 33% maltose) and 66% (w/w) digestible complex saccharides (consisting of 23% maltotriose and 43% higher saccharides).

*Formulations*

The two formulations along with their properties are given in Table 2.

TABLE 2

|  | Formulation | |
|---|---|---|
|  | **1** | **2** |
| SMP (% w/w) | 4.31 | 4.31 |
| Whey Powder (% w/w) | 5.00 | 5.00 |
| Glucose Syrup (% w/w) | 11.25 | 14.25 |
| Emulsifier (% w/w) | 0.40 | 0.40 |
| Palm Oil (% w/w) | 4.90 | 4.90 |
| Flavour (% w/w) | 0.20 | 0.20 |
| Fructose (% w/w) | 5.25 | 5.00 |
| Guar (% w/w) | 0.11 | 0.11 |
| LBG (% w/w) | 0.25 | 0.25 |
| Carrageenan (% w/w) | 0.04 | 0.04 |
| Water | 68.29 | 65.54 |
|  |  |  |
| *E* (kcal / 100 g) | 146 | 156 |

(continued)

|  | Formulation | |
| --- | --- | --- |
|  | 1 | 2 |
| E (kJ / 100 g) | 611 | 653 |
|  | | |
| Total sugars (% w/w) | 13.6 | 14.4 |
| Total Fructose (% w/w) | 5.3 | 5.0 |
| Digestible complex saccharides (% w/w) | 7.2 | 9.1 |
| Non-digestible saccharides (% w/w) | 0.3 | 0.3 |

*Process*

All ingredients except from the oil and emulsifier were combined in an agitated heated mix tank. The oil was warmed to around 60°C and then the emulsifier added to the liquid fat prior to pouring into the mix tank. Once all of the ingredients were blended together, the mix was subjected to high shear mixing at a temperature of 65°C for 2 minutes.

The premix was then passed through a homogeniser at 150 bar and 70°C and then subjected to pasteurisation at 83°C for 20 s before being rapidly cooled to 4°C by passing through a plate heat exchanger. The premix was then aged at 4°C for 5 hours in an agitated tank prior to freezing.

Each formulation was frozen using a typical ice cream freezer (scraped surface heat exchanger, SSHE) operating with an open dasher (series 80), a mix flow rate of 150 1 / hour, an extrusion temperature of -7°C and an overrun (at atmospheric pressure) of 100%. Directly from the freezer, the ice cream was filled into 250 ml cartons. The cartons were then hardened by blast freezing for 2 hours at -30°C before being transferred to a -25°C store for storage.

The ice creams were stored at -25°C for 3 weeks and then tempered at -18°C for 24 hours before consumption.

**Example 2**

This example demonstrates a further confection according to the invention which comprises significant levels of non-digestible saccharides.

*Materials*

The frozen confections were formulated using the same materials as in Example 1 with the exception of the following:

- Coconut oil was supplied by Van den Bergh Oils (Purfleet, UK) and had a saturated fatty acid content of 90%.
- Glucose syrup was C*Dry™ GL 01924, supplied by Cerestar (France) and had a DE of 28 and a moisture content of 4% (w/w). On a dry basis the glucose syrup solids consisted of 14% (w/w) sugars (consisting of 3% dextrose and 11% maltose) and 86% (w/w) digestible complex saccharides (consisting of 16.5% maltotriose and 69.5% higher saccharides).
- Oligofructose was Raftilose™ P95 supplied by ORAFTI (Tienen, Belgium) and had a moisture content of 3% (w/w). On a dry basis the Raftilose™ consisted of 95% (w/w) oligofructose and 5% (w/w) sugars (consisting of 3% sucrose, 1% fructose and 1% glucose).

*Formulation*

The formulation along with its properties are given in Table 3.

TABLE 3

|  | Formulation 3 |
| --- | --- |
| SMP | 7.00 |
| Glucose Syrup | 14.30 |
| Emulsifier | 0.30 |

(continued)

|  | Formulation 3 |
|---|---|
| Coconut Oil | 3.00 |
| Flavour | 0.01 |
| Fructose | 6.00 |
| Guar | 0.10 |
| LBG | 0.15 |
| Carrageenan | 0.02 |
| Oligofructose | 8.30 |
| Water | 60.82 |
|  |  |
| $E$ (kcal / 100 g) | 135 |
| $E$ (kJ /100 g) | 565 |
|  |  |
| Total sugars (% w/w) | 11.8 |
| Total Fructose (% w/w) | 6.1 |
| Digestible complex saccharides (% w/w) | 11.8 |
| Non-digestible saccharides (% w/w) | 7.9 |

*Process*

The formulation is processed as in Example 1.

**Claims**

1. A frozen confection having a total energy content in the range 377 to 607 kJ (90 to 145 kcal) per 100 g of frozen confection; and comprising:

    • total sugar, constituted by the sum of all of the digestible mono- and di-saccharides, in an amount of less than 12% by weight of the frozen confection, the total sugar comprising at least 4% fructose by weight of the frozen confection, and
    • digestible complex saccharides, constituted by the oligosaccharides and polysaccharides with a degree of polymerisation of at least three, in an amount of from 10 to 30% by weight of the frozen confection;
    • **characterised in that** the frozen confection comprises non-saccharide sweeteners selected from the group consisting of aspartame, saccharin, acesulfame K, alitame, thaumatin, cyclamate, glycyrrhizin, stevioside, neohesperidine, sucralose, monellin, neotame, polyglycitol, eythritol, arabitol, glycerol, xylitol, sorbitol, mannitol, lactitol, maltitol, isomalt, and palatinit.

    in a total amount $C_T$ given by the following condition:

$$C_T < X / R ,$$

    wherein $X$ is 0.5% (w/w) and $R$ is the sweetness of the non-saccharide sweeteners relative to sucrose expressed on a weight basis.

2. A frozen confection according to claim 1 wherein the frozen confection further comprises fat in an amount of from 0.5 to 7% by weight of the frozen confection.

3. A frozen confection according to claim 2 wherein the fat comprises saturated fat in an amount of from 10 to 55% by weight of the fat.

4. A frozen confection according to any preceding claim wherein the total sugar comprises less than 9% fructose by weight of the frozen confection.

5. A frozen confection according to any preceding claim wherein the total sugar comprises at least 0.5% lactose by weight of the frozen confection.

6. A frozen confection according to any preceding claim wherein the frozen confection has an overrun of from 50 to 150%.

7. A frozen confection according to any preceding claim wherein the frozen confection further comprises non-digestible saccharide in an amount of at least 4% by weight of the frozen confection.

8. A frozen confection according to claim 7 wherein the non-digestible saccharide is selected from the group consisting of oligofructose, inulin, polydextrose, resistant starch and mixtures thereof.

9. A frozen confection according to claim 7 or claim 8 wherein the non-digestible saccharide is present in an amount of less than 15% by weight of the frozen confection.

10. A process for manufacturing a frozen confection according to any of the preceding claims, the process comprising the steps of:

    (a) preparing a premix of ingredients; then
    (b) pasteurising and homogenising the premix; then
    (c) freezing and optionally aerating the premix to form a soft ice; and then
    (d) hardening the soft ice to produce the frozen confection.


**Patentansprüche**

1. Gefrorenes Konfekt, das einen Gesamt-Energiegehalt im Bereich von 377 bis 607 kJ (90 bis 145 kcal) pro 100 g gefrorenes Konfekt hat und das umfasst:

    • Gesamtzucker, bestehend aus der Summe aller verdaulichen Mono- und Disaccharide, in einer Menge von weniger als 12 Gewichts-% des gefrorenen Konfekts, wobei der Gesamtzucker wenigstens 4 Gewichts-% Fructose, bezogen auf das gefrorene Konfekt, umfasst, und
    • verdauliche komplexe Saccharide, bestehend aus Oligosacchariden und Polysacchariden mit einem Polymerisationsgrad von wenigstens 3, in einer Menge von 10 bis 30 Gewichts-%, bezogen auf das gefrorene Konfekt;
    • **dadurch gekennzeichnet, dass** das gefrorene Konfekt Nicht-Saccharid-Süßungsmittel umfasst, die ausgewählt sind aus der Gruppe, bestehend aus Aspartam, Saccharin, Acesulfam K, Alitam, Thaumatin, Cyclamat, Glycyrrhizin, Steviosid, Neohesperidin, Sucralose, Monellin, Neotam, Polyglycitol, Erythritol, Arabitol, Glycerin, Xylit, Sorbit, Mannit, Lactit, Maltit, Isomalt und Palatinit;

in einer Gesamtmenge $C_T$, die durch die folgende Bedingung angegeben wird:

$$C_T < X /R$$

worin X 0,5 % (G/G) ist und R die Süße der Nicht-Saccharid-Süßungsmittel relativ zu Saccharose, ausgedrückt auf Gewichtsbasis, ist.

2. Gefrorenes Konfekt nach Anspruch 1, wobei das gefrorene Konfekt außerdem Fett in einer Menge von 0,5 bis 7 Gewichts-% des gefrorenen Konfekts umfasst.

3. Gefrorenes Konfekt nach Anspruch 2, wobei das Fett gesättigtes Fett in einer Menge von 10 bis 55 Gewichts-% des Fettes umfasst.

**4.** Gefrorenes Konfekt nach einem vorangehenden Anspruch, wobei der Gesamtzucker weniger als 9 Gewichts-% Fructose, bezogen auf das gefrorene Konfekt, umfasst.

**5.** Gefrorenes Konfekt nach einem vorangehenden Anspruch, wobei der Gesamtzucker wenigstens 0,5 Gewichts-% Lactose, bezogen auf das gefrorene Konfekt, umfasst.

**6.** Gefrorenes Konfekt nach einem vorangehenden Anspruch, wobei das gefrorene Konfekt einen Aufschlag von 50 bis 150 % hat.

**7.** Gefrorenes Konfekt nach einem vorangehenden Anspruch, wobei das gefrorene Konfekt außerdem nicht-verdauliches Saccharid in einer Menge von wenigstens 4 Gewichts-%, bezogen auf das gefrorene Konfekt, umfasst.

**8.** Gefrorenes Konfekt nach Anspruch 7, wobei das nicht-verdauliche Saccharid ausgewählt ist aus der Gruppe, bestehend aus Oligofructose, Inulin, Polydextrose, resistenter Stärke und Gemischen davon.

**9.** Gefrorenes Konfekt nach Anspruch 7 oder Anspruch 8, wobei das nicht-verdauliche Saccharid in einer Menge von weniger als 15 Gewichts-%, bezogen auf das gefrorene Konfekt, vorliegt.

**10.** Verfahren zur Herstellung eines gefrorenen Konfekts nach einem der vorangehenden Ansprüche, wobei das Verfahren die folgenden Schritte umfasst:

(a) Herstellen einer Vormischung von Ingredienzien, dann
(b) Pasteurisieren und Homogenisieren der Vormischung, dann
(c) Gefrieren und gegebenenfalls Aufschäumen der Vormischung unter Bildung von Soft-Eis und danach
(c) Härten des Soft-Eis, um das gefrorene Konfekt herzustellen.


**Revendications**

**1.** Dessert glacé ayant une teneur en énergie totale dans la gamme de 377 à 607 kJ (90 à 145 kcal) pour 100 g de dessert glacé ; et comprenant

• des sucres totaux, constitués par la somme de tous les mono- et di-saccharides digestibles, dans une quantité inférieure à 12 % en poids du dessert glacé, les sucres totaux comprenant au moins 4 % de fructose en poids du dessert glacé, et
• des saccharides complexes digestibles, constitués par les oligosaccharides et polysaccharides avec un degré de polymérisation d'au moins trois, dans une quantité de 10 % à 30 % en poids du dessert glacé ;
• **caractérisé en ce que** le dessert glacé comprend des édulcorants non saccharides choisis dans le groupe consistant en l'aspartame, la saccharine, l'acésulfame K, l'alitame, la thaumatine, le cyclamate, la glycryrrhizine, le stévioside, la néohespéridine, le sucralose, la monelline, le néotame, le polyglycitol, l'érythritol, l'arabitol, le glycérol, le xylitol, le sorbitol, le mannitol, le lactitol, le maltitol, l'isomalt et le palatinite,

dans une quantité totale $C_T$ donnée par la condition suivante :

$$C_T \ < \ X \ / \ R,$$

où $X$ vaut 0,5 % (p/p) et $R$ est la sucrosité des édulcorants non saccharides par rapport au saccharose exprimée en poids.

**2.** Dessert glacé selon la revendication 1, dans lequel le dessert glacé comprend en outre des matières grasses dans une quantité de 0,5 à 7 % en poids du dessert glacé.

**3.** Dessert glacé selon la revendication 2, dans lequel les matières grasses comprennent des matières grasses saturées dans une quantité de 10 à 55 % en poids des matières grasses.

**4.** Dessert glacé selon l'une quelconque des revendications précédentes, dans lequel les sucres totaux comprennent moins de 9 % de fructose en poids du dessert glacé.

5. Dessert glacé selon l'une quelconque des revendications précédentes, dans lequel les sucres totaux comprennent au moins 0,5 % de lactose en poids du dessert glacé.

6. Dessert glacé selon l'une quelconque des revendications précédentes, dans lequel le dessert glacé a un excédent de 50 à 150 %.

7. Dessert glacé selon l'une quelconque des revendications précédentes, dans lequel le dessert glacé comprend en outre un saccharide non digestible dans une quantité d'au moins 4 % en poids du dessert glacé.

8. Dessert glacé selon la revendication 7, dans lequel le saccharide non digestible est choisi dans le groupe consistant en l'oligofructose, l'inuline, le polydextrose, l'amidon résistant, et leurs mélanges.

9. Dessert glacé selon la revendication 7 ou la revendication 8, dans lequel le saccharide non digestible est présent dans une quantité inférieure à 15 % en poids du dessert glacé.

10. Procédé de fabrication d'un dessert glacé selon l'une quelconque des revendications précédentes, le procédé comprenant les étapes consistant à :

(a) préparer un prémélange d'ingrédients ; puis
(b) pasteuriser et homogénéiser le prémélange ; puis
(c) congeler et aérer facultativement le prémélange pour former une glace molle ; puis
(d) durcir la glace molle pour produire le dessert glacé.

**EP 1 673 980 B2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4400405 A

- US 4631196 A

**Non-patent literature cited in the description**

- Diet, nutrition and the prevention of chronic diseases. *Report of a Joint WHO/FAO Expert Consultation,* 2003

- **D.A.T. SOUTHGATE ; J.V.G.A. DURNIN.** Calorie conversion factors. An experimental reassessment of the factors used in the calculation of the energy value of human diets. *British Journal of Nutrition,* 1970, vol. 24, 517-535
- **W.S. ARBUCKLE.** Ice Cream. van Nostrand Renhold Co Inc, 1986, 262